# EUROPEAN PATENT SPECIFICATION

(11) **EP 1 001 300 B1**
(45) Date of publication and mention of the grant of the patent: **18.06.2008**
(21) Application number: 99402804.1
(22) Date of filing: 10.11.1999
(51) Int. Cl.: G02B 27/22

(54) **Stereoscopic display device with two back light sources**
Stereoskopische Anzeige mit zwei Hintergrund-Lichtquellen
Dispositif d'affichage stéréoscopique avec deux sources d'éclairage par l'arrièrre

(30) Priority: 13.11.1998 EP 98402819; 13.11.1998 EP 98402818
(43) Date of publication of application: 17.05.2000
(73) Proprietor: THOMSON multimedia, 92100 Boulogne Billancourt (FR)
(72) Inventor: Chikazawa, Yoshiharu, 92100 Boulogne-Billancourt (FR)
(74) Representative: Ruellan-Lemonnier, Brigitte

(56) References cited:
- EP-A- 0 576 106
- EP-A- 0 650 301
- EP-A- 0 656 556
- EP-A- 0 656 730
- EP-A- 0 804 042
- PATENT ABSTRACTS OF JAPAN vol. 1997, no. 10, 31 October 1997 (1997-10-31) & JP 09 146043 A (SANYO ELECTRIC CO LTD), 6 June 1997 (1997-06-06)

## Description

The invention relates to a stereoscopic display device comprising a transmissive image reproducing element with two light sources on the rear side of this element.

For reproducing stereoscopic TV images, it is known to provide, on a display, alternately, an image for the left eye and an image for the right eye and to provide optical means directing the left image to the left eye and the right image to the right eye.

It has been more particularly proposed a LCD type display device wherein the picture elements (pixels) of the transmissive LCD are alternately activated in order to reproduce the image for the left eye and the image for the right eye. In this known device, two light sources and a lens are provided on the rear side of the (LCD) image reproducing element. These sources are located in the focal plane of the lens. The position of one source is such that the parallel beam that it produces on the front side of the LCD is directed towards the right eye and the other source is located in a position for which the parallel beam that it produces is directed towards the left eye. These sources are activated in synchronism with the corresponding images. In other words, the source which provides light directed towards the right eye is lit when the right image is activated on the LCD.

Display devices of the prior art are disclosed for example in EP 576106 or EP 656556.

The invention is based on the recognition that the volume of the known device is hardly compatible with portable applications such as for lap top computers or individual movie displays.

In order to overcome this drawback, the invention provides mirror means as defined in the claims to direct the light emitted by one light source towards the right eye and to direct the light emitted by the other source towards the left eye, the light sources and the image reproducing element being installed on the same side of the mirror means.

As, in the known device, the light sources and the image reproducing element are on opposite sides of a lens, the volume of the device according to the invention may be smaller than the volume of the known device.

The mirror means may provide parallel beams or converging beams.

Other features and advantages of the invention will appear with the following description of some of its embodiments, this description being made in connection with the drawings in which:
figure 1 represents schematically a stereoscopic display according to an embodiment of the invention,
figure 2 represents a Fresnel mirror for the device of figure 1,
figure 3 is another representation of the device of figure 1,
figure 4 shows another type of Fresnel mirror for the device of figure 1 or figure 3, and
figure 5 shows a comparative example.

In the embodiments represented on the drawings, the stereoscopic display device comprises a liquid crystal display 10 comprising a multiplicity of pixels for which the transmissivity and the color is controlled in order to form the image. In order to display stereoscopic moving images, the period of one image (one frame) is divided into two fields wherein the first (or second) field produces the image for the right eye and the second (or first) field produces the image for the left eye.

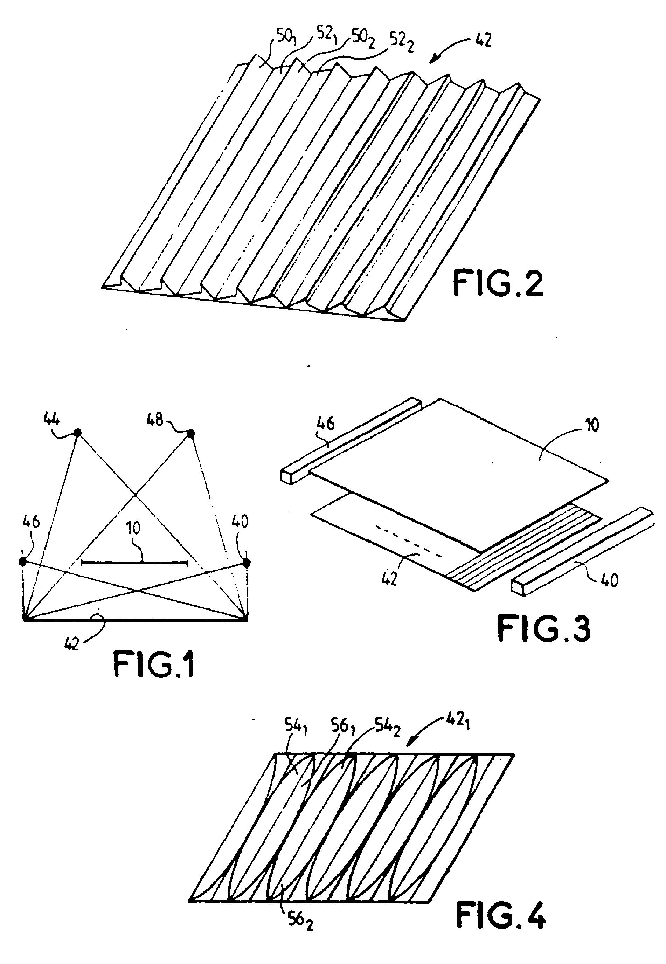

Two light sources 40 and 46 (figure 1 and figure 3) are lit alternately in synchronism with the reproduction of the images for the right eye and the images for the left eye. The light source 40 is energized when the image for the right eye 44 is reproduced on LCD 10 and the light source 46 is energized when the LCD 10 reproduces the image for the left eye 48. In the embodiment shown, the mirror 42 (figure 1) or 42₁ (figure 4) is converging and of the Fresnel type. This mirror makes an image of the right source 40 on the right eye 44 and an image of the left source 46 on the left eye 48.

During the first field, only the light source 40 is active and LCD 10 displays only the image for the right eye.

During the second field, only light source 46 is active and LCD 10 displays only the left image.

As shown on figure 1, the light source 40 is active when the LCD 10 displays the right image and the converging mirror 42 makes the image of this source 40 on the right eye 44. Similarly, the light source 46 is active only when LCD 10 displays the left image and the mirror 42 makes the image of this source 46 on the left eye 48.

The position of LCD 10 with respect to sources 40, 46 and with respect to the mirror 42 must be such that the light from sources 40 and 46 must cross this LCD 10 only after having been reflected by mirror 42.

The advantage of this embodiment is that it may be compact, because the light sources 40 and 46 are on the same side of mirror 42 as LCD 10. On the contrary, in the known device, the light sources, on one hand, and the LCD 10, on the other hand, are on opposite sides of a lens.

In the embodiments represented on the figures, the light sources 40 and 46 (figure 3) are elongated along one side of element 10 of rectangular shape.

The Fresnel mirror 42 represented on figure 2 has alternate elongated stripes 50₁, 52₁, 50₂, 52₂, etc. The direction of elongation is the direction of elongated light sources 40 and 46. The elongated stripes 50₁, 50₂, 50₃ ... 50ᵢ ... form a first converging mirror and the second elongated stripes 52₁, 52₂ ... 52ᵢ ... form a second converging mirror. The first converging mirror is the one which makes the image of source 40 on the right eye 44 (figure 1) and the second mirror, with elongated elements 52_{i,} makes the image of light source 46 on the left eye 48.

In this example, the two Fresnel mirrors (stripes 50ᵢ and 52ᵢ) are of the cylindrical type.

In order to distribute the light energy of each source 40 and 46 on LCD 10, it is possible to use a diffuser and/or an optical integrator (not shown).

In the embodiment shown on figure 4, the Fresnel mirror 42₁ has also two types of alternated elongated stripes 54₁, 56₁, 54₂, 56₂, etc. which form converging mirrors for the right and the left eyes. But the shapes of these mirrors are such that they can be used in conjunction with light sources of the punctual type. For instance, the two mirrors define an ellipsoïdo-paraboloïd of revolution.

The light sources may be of any type, for instance light emitting diodes (LED). One or several diodes may be used to form a punctual light source and these light diodes may be also disposed along a line in order to form elongated light sources.

The transmissive image reproducing element 10 may be of any type, either black and white or colored.

In another comparative example, the light sources 40 and 46 are at focal point(s) or plane(s) of a mirror and provide parallel beams respectively to right eye 44 and to left eye 48.

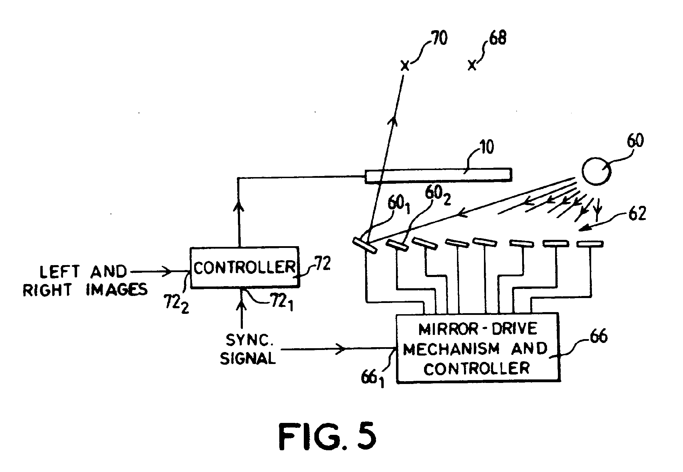

In the example represented on figure 5, only one light source 60 is provided and the mirror means 62 comprises an array of mirror elements 64₁, 64₂, etc. the orientation of which is controlled by motor means and a control circuit, both being represented by a block 66. The goal of the block 66 is to focus the light beam generated by a source 60 and reflected by each mirror element, alternately on the right eye 68 and on the left eye 70.

Like in the embodiment represented on figure 1, the LCD 10 is controlled in order to display alternately the images for the right eye and for the left eye. This control of the display 10 is realized with a synchronization signal provided at an input 72₁ of a control circuit 72 for the LCD 10. Said control circuit 72 has also an input 72₂ receiving the signals for the left and the right images.

The same synchronization signal which is provided to the input 72₁ of control circuit 72 for the LCD 10 is also provided to an input 66₁ of the block 66 for controlling the tilt of mirror elements 64₁, 64₂, etc.

Compared to the embodiment of figure 1, only one light source 60 is provided instead of two. Therefore, the device is less bulky; this feature is particularly advantageous for a portable device.

The mirror elements 64₁, 64₂, etc. may be either elongated elements (stripes), preferably in one direction, as those represented with figure 2 and figure 4, or small elements disposed in a matrix -like manner. In the latter case, a plurality of elements are provided on each column and on each line.

The control of the orientation or tilt of the mirrors may be realized conventionally like in a digital mirror device (DMD).

The light source 60 may have the shape of a point or an elongated shape, like lamp 40 represented on figure 3.

It may be necessary to use optical means (not shown) for a correct focusing at points 68 and 70, these optical means being installed between the light source 60 and the mirror means 62 and/or between the mirror means 62 and the focus points 68 and 70.

## Claims

1. A stereoscopic display device comprising a transmissive image reproducing element (10), light source means (40, 46), optical means to direct the light emitted by one light source towards the right eye and to direct the light emitted by the other light source towards the left eye, and control means for displaying alternately an image for the right eye and an image for the left eye on the image reproducing element (10), and for activating the source emitting light for the right eye only when the image for the right eye is displayed and for activating the source emitting light for the left eye only when the displayed image is for the left eye,
the optical means comprising a Fresnel mirror means (42, 42₁);
and the light sources and the image reproducing element being installed on the same side of the mirror means,
**characterized in that** the Fresnel mirror means comprise first mirror elements for directing the light of the corresponding source to the right eye and second mirror elements for directing the light of the other source towards the left eye.

2. A stereoscopic display device according to claim 1, **characterized in that** the mirror means are of the converging type.

3. A stereoscopic display device according to claim 1, **characterized in that** the mirror means provide parallel beams towards the eyes.

4. A stereoscopic display device according to claims 1 to 3, **characterized in that** the first and second mirror elements form an alternate succession.

5. A stereoscopic display device according to claims 1 to 4, **characterized in that** the mirror elements form stripes elongated in one direction.

6. A stereoscopic display device according to any of the previous claims, **characterized in that** the mirror means form cylindrical mirror means or ellipsoido-paraboloid mirror means.

7. A stereoscopic display device according to any of the previous claims, **characterized in that** the light sources are elongated in the same direction.

8. A stereoscopic display device according to claim 6, **characterized in that** the image reproducing element has a rectangular shape and **in that** the light sources are elongated along one side of this image reproducing element.

9. A stereoscopic display device according to any of the previous claims, **characterized in that** the image reproducing element comprises a liquid crystal display element.

10. A stereoscopic display device according to any of the previous claims, **characterized in that** the image for the right eye is formed during a field of a frame and the image for the left eye is formed during the other field of the frame.

## Patentansprüche

1. Stereoskopische Anzeigevorrichtung, ein Element (10), das ein Durchlichtbild reproduziert, Lichtquellenmittel (40, 46), optische Mittel, um das von einer Lichtquelle ausgestrahlte Licht auf das rechte Auge zu richten und um das von der anderen Lichtquelle ausgestrahlte Licht auf das linke Auge zu richten, und Steuerungsmittel umfassend, um abwechselnd ein Bild für das rechte Auge und ein Bild für das linke Auge auf dem Element (10), welches das Bild reproduziert, anzuzeigen, und um die Quelle, die Licht für das rechte Auge ausstrahlt, nur dann zu aktivieren, wenn das Bild für das rechte Auge angezeigt wird, und um die Quelle, die Licht für das linke Auge ausstrahlt, nur dann zu aktivieren, wenn das angezeigte Bild für das linke Auge ist,
wobei die optischen Mittel Fresnel-Spiegelmittel (42, 42₁) umfassen;
und wobei die Lichtquellen und das Element, welches das Bild reproduziert, auf derselben Seite der Spiegelmittel installiert sind,
**dadurch gekennzeichnet, dass** die Fresnel-Spiegelmittel erste Spiegelelemente, um das Licht der entsprechenden Quelle auf das rechte Auge zu richten und zweite Spiegelelemente umfassen, um das Licht der anderen Quelle auf das linke Auge zu richten.

2. Stereoskopische Anzeigevorrichtung nach Anspruch 1, **dadurch gekennzeichnet, dass** die Spiegelmittel von der konvergierenden Art sind.

3. Stereoskopische Anzeigevorrichtung nach Anspruch 1, **dadurch gekennzeichnet, dass** die Spiegelmittel parallele Strahlen auf die Augen zur Verfügung stellen.

4. Stereoskopische Anzeigevorrichtung nach den Ansprüchen 1 bis 3, **dadurch gekennzeichnet, dass** die ersten und zweiten Spiegelelemente eine abwechselnde Aufeinanderfolge ausbilden.

5. Stereoskopische Anzeigevorrichtung nach den Ansprüchen 1 bis 4, **dadurch gekennzeichnet, dass** die Spiegelelemente Streifen ausbilden, die sich länglich in eine einzige Richtung erstrecken.

6. Stereoskopische Anzeigevorrichtung nach irgendeinem der vorhergehenden Ansprüche, **dadurch gekennzeichnet, dass** die Spiegelmittel zylinderförmige Spiegelmittel oder ellipsoid-parabole Spiegelmittel ausbilden.

7. Stereoskopische Anzeigevorrichtung nach irgendeinem der vorhergehenden Ansprüche, **dadurch gekennzeichnet, dass** sich die Lichtquellen länglich in dieselbe Richtung erstrecken.

8. Stereoskopische Anzeigevorrichtung nach Anspruch 6, **dadurch gekennzeichnet, dass** das Element, welches das Bild reproduziert, eine rechtwinkelige Gestalt aufweist, und dass sich die Lichtquellen länglich entlang einer einzigen Seite des Elementes erstrecken, welches das Bild reproduziert.

9. Stereoskopische Anzeigevorrichtung nach irgendeinem der vorhergehenden Ansprüche, **dadurch gekennzeichnet, dass** das Element, welches das Bild reproduziert, ein Flüssigkristallanzeigeelement umfasst.

10. Stereoskopische Anzeigevorrichtung nach irgendeinem der vorhergehenden Ansprüche, **dadurch gekennzeichnet, dass** das Bild für das rechte Auge während eines Halbbildes eines Rahmens und das Bild für das linke Auge während des anderen Halbbildes des Rahmens ausgebildet wird.

## Revendications

1. Dispositif d'affichage stéréoscopique comprenant un élément de reproduction d'image transmissive (10), des moyens de source lumineuse (40, 46), des moyens optiques pour diriger la lumière émise par une source lumineuse vers l'oeil droit et pour diriger la lumière émise par l'autre source lumineuse vers l'oeil gauche, et un moyen de contrôle pour afficher alternativement une image pour l'oeil droit et une image pour l'oeil gauche sur l'élément de reproduction d'image (10), et pour activer la lumière d'émission source pour l'oeil droit uniquement lorsque l'image pour l'oeil droit est affichée et pour activer la lumière d'émission source pour l'oeil gauche uniquement lorsque l'image affichée est destinée à l'oeil gauche,
les moyens optiques comprenant des moyens de miroir Fresnel (42,42₁) ;
et les sources lumineuses et l'élément de reproduction d'image étant installés du même côté que le moyen de miroir,
**caractérisé en ce que** le moyen de miroir Fresnel comprend des premiers éléments de miroir pour diriger la lumière de la source correspondante vers l'oeil droit et des deuxièmes éléments de miroir pour diriger la lumière de l'autre source vers l'oeil gauche.

2. Dispositif d'affichage stéréoscopique selon la revendication 1, **caractérisé en ce que** les moyens de miroir sont de type convergent.

3. Dispositif d'affichage stéréoscopique selon la revendication 1, **caractérisé en ce que** les moyens de miroir fournissent des faisceaux parallèles vers les yeux.

4. Dispositif d'affichage stéréoscopique selon les revendications 1 à 3, **caractérisé en ce que** les premiers et deuxièmes éléments de miroir forment une succession alternée.

5. Dispositif d'affichage stéréoscopique selon les revendications 1 à 4, **caractérisé en ce que** les éléments de miroir forment des bandes allongées dans un sens.

6. Dispositif d'affichage stéréoscopique selon une quelconque des revendications précédentes, **caractérisé en ce que** le moyen de miroir forme un moyen de miroir cylindrique ou un moyen de miroir ellipsoïdal-parabolique.

7. Dispositif d'affichage stéréoscopique selon une quelconque des revendications précédentes, **caractérisé en ce que** les sources lumineuses sont allongées dans le même sens.

8. Dispositif d'affichage stéréoscopique selon la revendication 6, **caractérisé en ce que** l'élément de reproduction d'image est de forme rectangulaire et **en ce que** les sources lumineuses sont allongées le long d'un côté de cet élément de reproduction d'image.

9. Dispositif d'affichage stéréoscopique selon une quelconque des revendications précédentes, **caractérisé en ce que** l'élément de reproduction d'image comprend un élément d'affichage à cristaux liquides.

10. Dispositif d'affichage stéréoscopique selon une quelconque des revendications précédentes, **caractérisé en ce que** l'image pour l'oeil droit est formée durant un champ d'une trame et l'image pour l'oeil gauche est formée durant l'autre champ de la trame.
